# FASCICULE DE BREVET EUROPEEN

(11) **EP 2 673 421 B1**
(45) Date de publication et mention de la délivrance du brevet: **04.11.2020**
(21) Numéro de dépôt: 12711919.6
(22) Date de dépôt: 10.02.2012
(51) Int. Cl.: B09B 1/00, E02B 11/00, E01C 13/02

(54) **GÉOCOMPOSITE, SYSTÈME ET PROCÉDÉ DE RÉCUPÉRATION DE FLUIDE**
GEOKOMPOSIT, SYSTEM UND VERFAHREN ZUR RÜCKGEWINNUNG VON FLÜSSIGKEITEN
GEOCOMPOSITE, SYSTEM AND METHOD FOR FLUID RECOVERY

(30) Priorité: 10.02.2011 FR 1151079
(43) Date de publication de la demande: 18.12.2013
(73) Titulaire: Afitex International, 28000 Chartres (FR)
(72) Inventeur: DURKHEIM, Yves, F-28600 Luisant (FR)
(74) Mandataire: Debay, Damien
(86) Numéro de dépôt international: PCT/FR2012/050303
(87) Numéro de publication internationale: WO 2012/107703

(56) Documents cités:
- EP-A1- 0 671 583
- EP-A1- 0 671 583
- EP-A1- 0 775 512
- EP-A1- 0 775 512
- CN-U- 201 713 999
- CN-U- 201 713 999
- DE-A1- 4 426 054
- DE-A1- 4 426 054
- DE-U1-202008 013 641
- DE-U1-202008 013 641
- FR-A1- 2 746 424
- FR-A1- 2 746 424
- US-A- 3 461 675
- US-A- 4 733 989
- US-A- 4 733 989
- US-A1- 2005 025 582
- US-A1- 2005 025 582
- US-A1- 2006 254 672
- US-A1- 2006 254 672

## Description

La présente invention concerne le domaine des systèmes de récupération de fluide, notamment dans les sols. L'invention s'applique par exemple à la récupération de gaz mais également de liquides, en particulier dans des agrégats tels que les sols, sédiments, déchets, etc. D'une manière générale, l'invention s'applique à tout type de fluide qui peut être présent dans des agrégats et peut être mise en oeuvre dans les sols en général, par exemple sous des ouvrages, comme des bassins de rétention ou des fondations d'une construction, dans des déchets d'une décharge ou dans des sédiments de divers types.

Il est connu de l'art antérieur, notamment des demandes de brevet FR2746424 et US4733989, des géocomposites et des produits laminaires destinés à des applications de drainage, comprenant au moins une nappe ou couche drainante et au moins une couche en matériau étanche. Cependant, ces solutions présentent les inconvénients de ne pas permettre une récupération de fluide suffisamment efficace et de ne pas résoudre certains problèmes dans le domaine de la récupération de fluide.

Il est aussi connu de l'art antérieur le document EP0775512.

Un premier problème dans le domaine des systèmes de récupération de fluide concerne le fait qu'il est généralement difficile de récupérer les fluides présents dans les agrégats, en particulier lorsqu'il s'agit de récupérer des gaz. Par exemple, il est connu dans les décharges de déchets de l'art antérieur, notamment dans les décharges enfouies, des systèmes de récupération de gaz comprenant des puits et/ou des tranchées ménagés au sein des déchets pour collecter les gaz qui s'échappent de ces derniers, notamment au cours de la décomposition des déchets organiques. Ces systèmes présentent les inconvénients d'être coûteux et complexes à mettre en place car ils nécessitent de ménager des puits et des tranchées collectrices au sein des déchets au cours de l'enfouissement de ces derniers. De plus, la récupération des gaz n'a lieu généralement qu'aux alentours des puits et tranchées, alors qu'une quantité non négligeable de gaz peut ainsi gagner la surface de la décharge, ce qui crée des problèmes, notamment de pollution. De même, dans le domaine du bâtiment ou des travaux publics, et d'une manière générale dans divers types d'ouvrages, le problème de la récupération des gaz intervient fréquemment, notamment sous des bassins de rétention d'eau ou sous les fondations des constructions. En effet, les bassins de rétention d'eau sont ménagés sur un support étanche aux liquides et les fondations des constructions sont généralement ménagées sur un support étanche à l'eau et/ou aux gaz (tel qu'une membrane en polyane ou polyéthylène par exemple) ou sont ménagées directement sur le sol (ou le sous-sol dans le cas d'une excavation). Or, il est fréquent que des gaz remontent des profondeurs des sols et leur accumulation sous les ouvrages présente des risques pour ces derniers.

Un second problème, qui se pose également dans les domaines des déchets et des constructions, concerne le fait que les systèmes de récupération de gaz connus ne sont généralement pas adaptés à la récupération de liquide. Par exemple, les puits et tranchées utilisés dans les décharges sont agencés pour la récupération de gaz, mais les liquides qui viendraient à y pénétrer s'écoulent au fond et nécessitent de prévoir des dispositifs supplémentaires et spécifiques pour leur récupération. Le système de récupération de gaz nécessite donc d'être complémenté par un système de récupération de liquide, ce qui présente des inconvénients de coûts et de complexité de mise en œuvre.

Dans ce contexte, on comprend qu'il est intéressant de proposer un système de récupération de fluide qui soit efficace, facile et peu coûteux à mettre en œuvre et qui permette éventuellement de récupérer divers types de fluide, et en particulier de récupérer à la fois des gaz et des liquides.

Un but de la présente invention est de pallier au moins certains inconvénients de l'art antérieur en proposant notamment un géocomposite de récupération de fluides dans des agrégats, qui soit peu coûteux et efficace.

Ce but est atteint par un géocomposite selon l'objet de la revendication 1.

D'autres particularités et avantages sont définies dans les revendications dépendantes de la revendication 1.

Un autre but de la présente invention est de pallier au moins certains inconvénients de l'art antérieur en proposant un système de récupération de fluide dans des agrégats, qui soit pratique d'utilisation, peu coûteux et efficace.

Ce but est atteint par un système selon l'objet de la revendication 2.

D'autres particularités et avantages sont définies dans les revendications dépendantes de la revendication 2.

Un autre but de la présente invention est de pallier au moins certains inconvénients de l'art antérieur en proposant un procédé de récupération de fluide dans des agrégats, qui soit peu coûteux et efficace.

Ce but est atteint par un procédé selon l'objet de la revendication 9.

D'autres particularités et avantages sont définies dans les revendications dépendantes de la revendication 9.

D'autres particularités et avantages de la présente invention apparaîtront plus clairement à la lecture de la description ci-après, faite en référence aux dessins annexés, dans lesquels :
- la figure 1 représente une vue en perspective d'un système selon certains modes de réalisation de l'invention,
- la figure 2 représente une vue en perspective d'un système selon certains modes de réalisation de l'invention,
- les figures 3A et 3B représentent chacune une vue en coupe d'une partie d'un système selon certains modes de réalisation de l'invention,
- les figures 4A et 4B représentent chacune une vue en coupe d'une partie d'un système selon certains modes de réalisation de l'invention,
- les figures 5A et 5B représentent des vues de dessus de certains modes de réalisation d'un connecteur, respectivement seul et connecté à un tuyau d'évacuation et un mini-drain, la figure 5D représente une vue en coupe d'un mode de réalisation d'un connecteur, transversalement à l'axe longitudinal d'au moins un des conduits de ce connecteur, et les figures 5C, 5E et 5F représentent des vues de profil de divers modes de réalisation de connecteurs,
- la figure 6A représente une vue de dessus de certains modes de réalisation d'un connecteur, connecté à des mini-drains et un tuyau d'évacuation, et les figure 6B et 6C représentent des variantes de ces modes de réalisation, par des vues en coupe transversalement à l'axe longitudinal de ce connecteur,
- la figure 7 représente les étapes d'un procédé similaire au procédé selon l'invention.

La présente invention concerne un système, un procédé, un géocomposite (2) de récupération de fluide, en particulier dans des agrégats (S). Le terme « agrégat » est utilisé ici dans son acception générale de « réunion d'un ensemble d'éléments distincts, de nature(s) identique ou différentes». Ce terme est utilisé au pluriel pour signifier qu'il regroupe éventuellement de nombreux éléments mais peut en fait consister en un seul type d'agrégat, contenant lui-même un seul type d'élément ou plusieurs éléments hétérogènes. D'une manière générale, l'utilisation du singulier ou du pluriel dans la présente demande n'est nullement limitatif. Le terme d'agrégat recouvre donc, entre autres, la définition des sols, des sédiments, des boues ou des déchets. Par exemple, cet agrégat pourra en fait être le sol sur lequel et/ou dans lequel on met en oeuvre la présente invention. L'homme de métier comprendra à la lecture de la présente demande que ce terme n'est pas limité aux exemples fournis ici et que l'invention peut être utilisée pour tout type d'élément(s) du moment qu'un fluide peut traverser l'élément ou les éléments constituant l'agrégat ou les agrégats.

D'une manière générale, la présente invention permet de répondre au problème de l'évacuation des fluides, notamment les gaz mais également les liquides, qui sont présents dans les agrégats (sols, sédiments, déchets, etc.). La présente invention est particulièrement efficace pour une récupération de fluides dans des déchets, notamment de décharges enfouies par exemple. Il est généralement préférable de récupérer les fluides présents dans les décharges car ils constituent une source de pollution (notamment atmosphérique pour les fluides gazeux et des sols et sous-sols pour les liquides). La présente invention peut également être utilisée dans le domaine des ouvrages tels que le bâtiment ou les travaux publics sous lesquels il est préférable de ne pas laisser s'accumuler les fluides, notamment les fluides gazeux (G). La présente invention tire avantage du fait que les fluides sont généralement capables de traverser les agrégats (S) et permet de les récolter. L'homme de métier comprendra à la lecture de la présente demande que les fluides concernés sont généralement des fluides gazeux (G) mais que certains modes de réalisation de l'invention permettent également la récupération de fluides liquides (L).

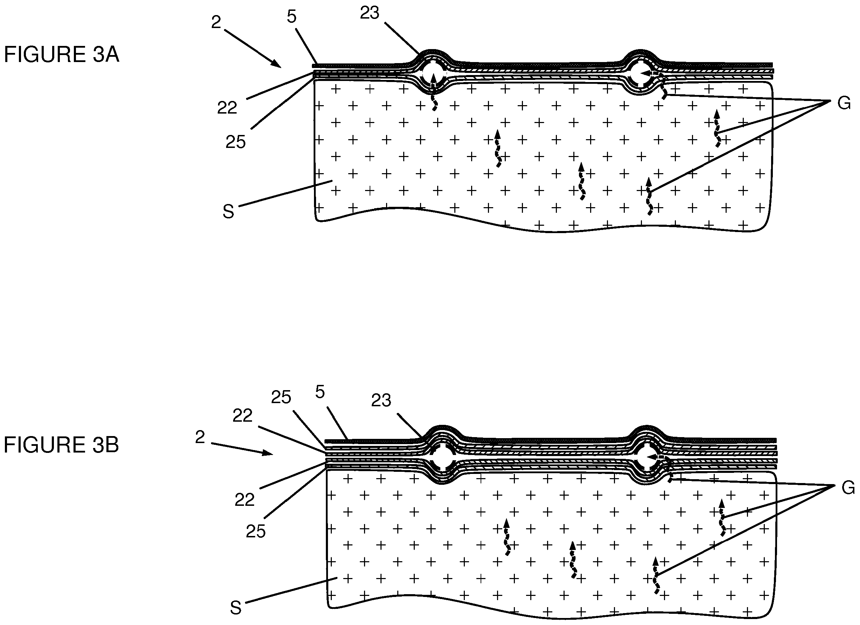

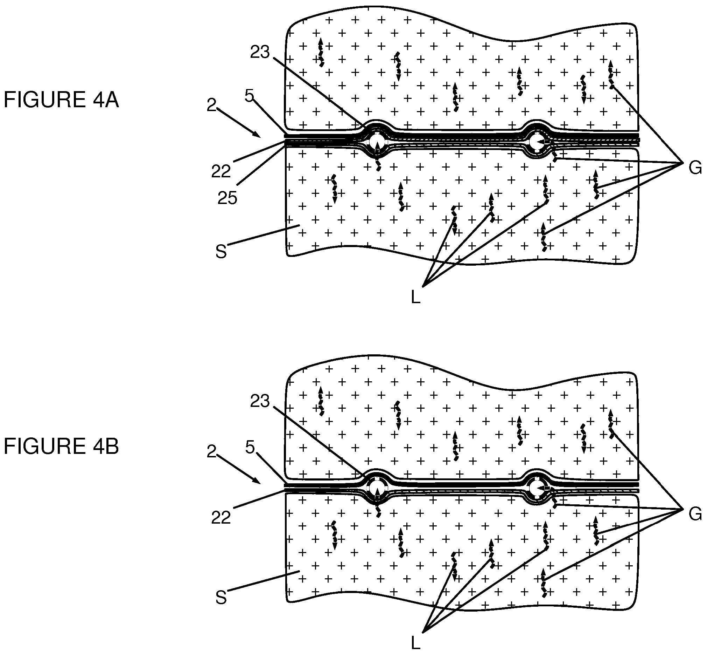

La présente invention utilise au moins un géocomposite (2). Ce géocomposite (2) comporte au moins une nappe (22), dite passante, agencée pour capter le(s) fluide(s) et des mini-drains perforés (23) agencés pour récolter et drainer le(s) fluide(s) captés par la(ou les) nappe(s) du géocomposite (2). La présente demande détaille les divers types de nappes et matériaux et on comprendra de la présente description que le but de cette nappe passante (22) est de canaliser le(s) fluide(s) (G, L). La perméabilité de cette nappe passante (22) est adaptée pour que les fluides que l'invention vise à récupérer puissent pénétrer dans la nappe passante (22).En outre, le géocomposite (2) comporte une nappe, dite barrière (5), qui est intégrée au géocomposite (2) par aiguilletage sur la nappe passante. L'aiguilletage sera réalisé sur la nappe passante (22) à l'exception de portions situées à proximité des mini-drains perforés (23), de façon à former une barrière au passage des fluides (G, L) uniquement autour des mini-drains (23). En effet, la nappe barrière (5) est agencée pour bloquer le passage de fluide (G, L) et l'aiguilletage permet au fluide de passer. On obtient donc par l'aiguilletage un ensemble dont on peut choisir les zones où le fluide peut passer. La nappe barrière (5) possède une perméabilité adaptée au blocage de fluide (G, L), c'est-à-dire qu'elle est agencée pour arrêter des fluides qui remonteraient et/ou descendraient dans les agrégats (S). En effet, dans les agrégats (S), et en particulier dans les sols ou les déchets, il est fréquent que des fluides gazeux (G) remontent et/ou que des fluides liquides (L) descendent (percolent). De plus, il est parfois observé, notamment dans les décharges, des remontées de fluides liquides (L) (tels que des lixiviats par exemple), notamment par capillarité au sein des agrégats (S). La nappe barrière (5) est donc agencée pour bloquer ces fluides (G, L) dans leur trajet au travers des agrégats (S). On notera que les diverses nappes utilisées dans l'invention sont destinées à être utilisées sensiblement horizontalement, c'est-à-dire déposée à plat sur, et/ou dans, les agrégats (S) et que l'on utilise dans la présente description les termes de « sur », « sous », « au-dessus » et « en-dessous » par rapport au référentiel terrestre car l'invention se définit par rapport à la profondeur et à la surface des sols (ou agrégats en général). Sous la nappe barrière (5) sont disposés des mini-drains perforés (23) et au moins une nappe passante (22) qui possède une perméabilité adaptée au passage de fluide (G, L). Cette nappe est dite passante car elle est agencée pour laisser passer le(s) fluide(s) (gazeux et/ou liquides) qui traversent les agrégats (en remontant ou en descendant). Cette nappe (22) passante pourra être prévue pour être drainante ou être filtrante, c'est-à-dire avoir une perméabilité adaptée pour laisser passer ou non des particules de tailles variables. De préférence, la nappe passante (22) sera disposée en-dessous des mini-drains (23) et la nappe barrière (5) sera disposée au-dessus des mini-drains (23), par exemple comme représenté sur la figure 4B. Dans certains modes de réalisation, le géocomposite (2) peut comporter au moins une seconde nappe passante (25), disposée de l'autre côté des mini-drains perforés (23) par rapport à la première nappe passante (22). Ainsi, on aura alors de préférence une première nappe passante (22) disposée en-dessous des mini-drains et une seconde nappe passante (25) disposée au-dessus des mini-drains et en-dessous de la nappe barrière (5), par exemple comme représenté sur les figures 3A et 4A. La nappe barrière (5) est agencée pour former une barrière retenant les fluides. Cette nappe sera de préférence en matériau sensiblement imperméable aux gaz et/ou aux liquides. On notera que cette nappe barrière (5) n'est pas nécessaire parfaitement imperméable mais doit au moins fournir un contraste de perméabilité avec les autres éléments et les agrégats. En effet, pour que la nappe passante (22) joue pleinement son rôle de drainage et de récolte des fluides, tel que détaillé dans la présente demande, il est nécessaire qu'elle présente une meilleure perméabilité au fluide que la nappe barrière (5) et que le support (notamment les agrégats) sur lequel elle est disposée. On parle ici de « sensiblement étanche » et de « sensiblement imperméable » car une imperméabilité ou une étanchéité parfaite n'est pas forcément nécessaire, du moment que les perméabilités sont adaptées pour que le fluide emprunte préférentiellement le chemin d'évacuation via les min-drains (23). Ainsi, on pourra prévoir pour la nappe barrière (5) une membrane, un film, une nappe synthétique ou un textile moins perméable que la nappe passante (22). Cependant, comme les fluides que l'on souhaite récupérer sont souvent des gaz, notamment des gaz polluants, on préfèrera généralement une membrane complètement imperméable. Cette membrane pourra par exemple être une membrane en PEHD (PolyEthylène Haute Densité) pour garantir une bonne solidité et une bonne étanchéité. On entend donc dans la présente demande, par le terme « nappe barrière (5) » ces différentes possibilités, qu'il s'agisse effectivement d'une membrane ou non (textiles ou autres, voire même des sédiments) et que l'imperméabilité soit relative (« sensiblement ») ou totale (« complètement »). La nappe barrière (5) est de préférence une nappe synthétique et la(ou les) nappe(s) passante(s) (22, 25) est(ou sont) de préférence une (ou des) nappe(s) textile(s). Les perméabilités des nappes textile (22, 25) et synthétique (5) sont adaptées pour que les fluides (G, L) empruntent préférentiellement le chemin d'évacuation via les min-drains (23).

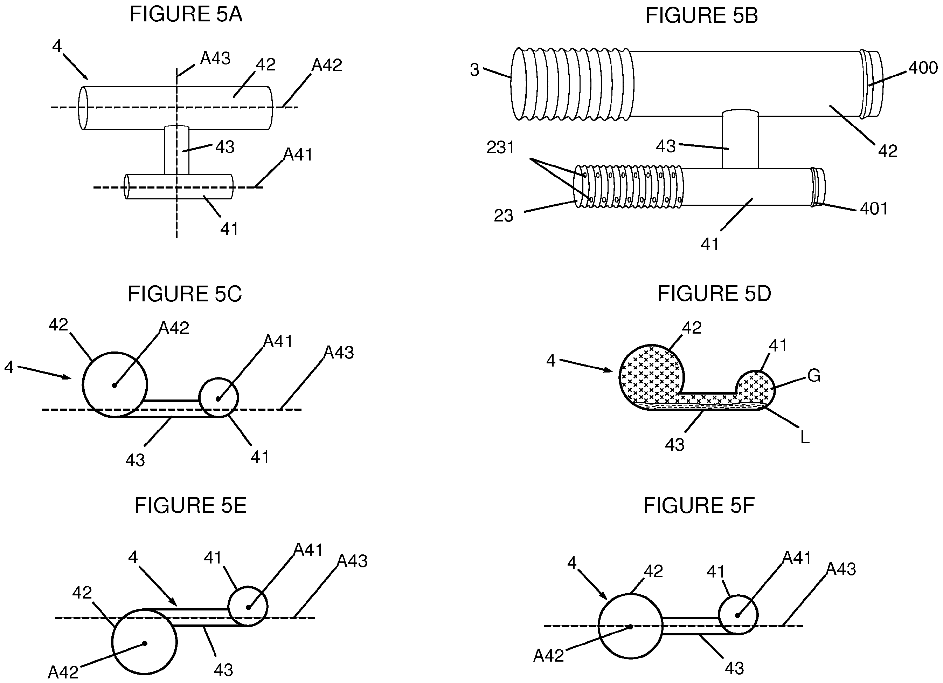

De façon non limitative, les mini-drains (23) sont de préférence parallèles entre eux et à des distances choisies en fonction de la destination du géocomposite (2). Par exemple, ils peuvent être répartis de façon à ce qu'ils soient espacés d'une distance allant de 0,2 mètre à 4 mètres de largeur du géocomposite (2), de préférence entre 0,5 et 2 mètres, idéalement de l'ordre du mètre. De préférence, ces mini-drains sont annelés et ont des performations alternées à approximativement 90°. De préférence, chaque gorge des annelures d'un mini-drain (23) est munie de deux perforations (231) diamétralement opposées et les perforations (231) de deux gorges successives sont décalées entre elles de 90°, par exemple comme visible sur la figure 5B. Dans certains modes de réalisation, les mini-drains (23) perforés possèdent des perforations (231) qui, au lieu d'être rondes sont ovales ou oblongues pour limiter la résistance à l'entrée de fluide et ainsi de limiter le colmatage des perforations (231, fig. 5B). De manière illustrative et non limitative, ces perforations pourront avoir une taille de l'ordre de 0,5 millimètre à 2 millimètres, de préférence de 0,7 à 1,5 mm, idéalement de l'ordre du millimètre. De plus, dans certains modes de réalisation, les mini-drains sont annelés, par exemple comme représenté sur la figure 5B, pour fournir une meilleure résistance à la pression, ce qui permet leur enfouissement sous une quantité considérable d'agrégats. Dans certains modes de réalisation, ces annelures facilitent également la connexion des mini-drains avec des connecteurs (4) décrits dans la présente demande. Les mini-drains (23) ont pour but de capter le(s) fluide(s) (G, L) en vue d'un drainage et d'une récupération/évacuation. Ils sont en général, de façon illustrative et non limitative, résistants à des pressions allant jusqu'à 750 kPa ce qui correspond à environ 60 m de hauteur d'agrégats (S) en moyenne au-dessus du mini-drain. Les mini-drains (23) sont résistants à la compression ce qui permet aux fluides de toujours pouvoir être évacués même lorsque le géocomposite (2) est enterré sous des agrégats (dans le sol par exemple). Selon divers modes de réalisation, de façon non limitative, afin d'avoir une optimisation du flux du fluide, les mini-drains (23) peuvent avoir des diamètres compris entre 5 mm et 50 mm, de préférence entre 10 mm et 25 mm, idéalement de l'ordre de 25 mm. Le diamètre des mini-drains ne doit pas excéder une certaine valeur pour une composition et un agencement donnés des mini-drains, de façon à ce qu'ils résistent au poids des agrégats (S) comme mentionné ci-dessus.

Dans certains modes de réalisation, ledit géocomposite (2) comporte également au moins une nappe filtrante recouvrant les mini-drains perforés (23), de manière à filtrer le fluide, notamment les fluides liquides (L). Ainsi, dans certains modes de réalisation, les mini-drains (23) sont entourés de plusieurs couches de nappes différentes, au-dessus et/ou en-dessous des mini-drains. Les nappes filtrantes ont pour but de protéger les nappes passantes du colmatage par de fines particules. De telles nappes ont par conséquent une porométrie adaptée à cette fonction, de même que la nappe passante à une porométrie adaptée à sa fonction. La nappe filtrante est de préférence agencée pour filtrer le fluide et calibrer les particules qui pénètrent dans le géocomposite alors que la drainante est de préférence agencée pour faciliter la circulation du fluide dans le géocomposite. Ces deux nappes auront donc des ouvertures différentes, adaptées respectivement à leur fonction. On notera que l'on parle ici de « nappe » qui est un terme classique pour un géotextile, correspondant en général à un enchevêtrement de fils aiguilletés qui peut être désigné également par le terme « feutre », mais il est possible d'utiliser d'autres types de revêtements, de préférence des géotextiles, tels que par exemple des textiles tissés ou non, tricotés ou non, etc.. Ce terme de « nappe » désignant classiquement un type de textile doit donc être interprété de façon moins limitative dans la présente demande car il est prévu de pouvoir utiliser d'autres types de revêtement que les nappes de géotextiles, bien que ces dernières soient particulièrement adaptées à la présente invention. En effet, les enchevêtrements de fils aiguilletés fournissent en général des perméabilités particulièrement adaptées à la présente invention mais pour adapter la récupération de(s) fluide(s) (L, G) à la (ou aux) nature(s) de ce(s) dernier(s), il est possible d'utiliser d'autres types de revêtement ou même des combinaisons de ces nappes de géotextiles avec d'autres revêtements. La nappe barrière (5) étant de préférence sensiblement imperméable ou étanche, on préfèrera un matériau synthétique, voire éventuellement une membrane ou un film plutôt qu'une vraie nappe. La nappe passante (22) est de préférence non tissée. La technique de l'aiguilletage est utilisée dans l'invention car elle est facile à mettre en œuvre et permet des agencements variés, dont des exemples sont décrits dans la présente demande. Par exemple, au cours de l'aiguilletage des nappes, des espaces peuvent être prévus pour y disposer les mini-drains (23). Ces mini-drains (23) sont par conséquent liés à la structure du géocomposite (2) puisqu'ils sont déjà mis en place entre les nappes au moment de leur aiguilletage. La liaison inter-nappes réalisée par aiguilletage confère au géocomposite (2) plusieurs qualités. En effet, ce mode de liaison des nappes offre un géocomposite possédant une résistance aux cisaillements internes accrue. Cette résistance est telle que le géocomposite (2) peut être utilisé pour le drainage de talus pentus. La liaison par aiguilletage permet également d'offrir un géocomposite (2) ayant une porométrie uniforme et constante. Un géocomposite (2) dont les liaisons sont réalisées par aiguilletage présente une solidité accrue à la pose et en cours d'utilisation car les contraintes subies s'appliquent à toute la masse et non pas en quelques points bien précis de la structure. Enfin, les qualités filtrante et/ou drainante du géocomposite (2) ne sont pas altérées comme c'est le cas avec une liaison par collage ou par couture. En général et de préférence, les nappes (22, 25, 5), ainsi que les mini-drains (23), sont constitués de matériaux imputrescibles comme par exemple du polypropylène et sont résistants à un milieu acide ou basique.

Souvent, notamment dans le domaine des stockages de déchets, il est nécessaire de récupérer le(s) fluide(s) produit(s) par ces déchets ou ceux produits après l'aspersion des déchets par au moins un fluide qui peut être de l'eau et/ou un solvant et/ou un acide par exemple. On notera que le terme « fluide » est utilisé dans la présente demande de manière égale que ce fluide ait été ajouté aux agrégats (S) ou produit par eux-mêmes. Les fluides liquides qui percolent par exemple au fond des casiers dans lesquels sont stockés les déchets doivent généralement être récupérés par un système d'évacuation afin qu'ils ne pénètrent pas le sol dans lequel les déchets sont enterrés. Or, le fluide provenant de déchets sont chargés en particules bactériologiques et fongiques qui, à long terme, peuvent colmater le géocomposite (2). Ceci a pour conséquence d'arrêter le passage du fluide et de rendre inefficace le géocomposite (2). Dans certains modes de réalisation, de façon à pallier à ce problème, les nappes peuvent être composées de fibres qui ont été extrudées avec au moins un principe actif antibactérien et/ou bactéricide et/ou fongicide. Ce principe actif peut être noyé dans les fibres de façon à être présent sur la surface des fibres et au cœur des fibres. Cette répartition permet à moyen et long termes une migration des agents antibactériens et/ou bactéricides et/ou fongicides à la surface des fibres, rendant le produit efficace à long terme. Les nappes sont de préférence composées de fibres de diamètre important. Ce diamètre correspond par exemple à un titrage des fibres ou une masse linéique des fils compris entre 4 dtex (ou « dtx », abréviation de décitex) et 110 dtex en considérant que 1 dtex correspond à 1 mg de matière composant les fibres pour 1 m de fibre. Ceci permet d'avoir une grande ouverture de filtration et d'avoir une composante de vitesse de perméabilité normale au plan du géocomposite (2) qui soit assez importante pour que cela réduise la durée de contact entre le géocomposite (2) et le fluide afin de limiter les risques de colmatage dû aux bactéries ou aux champignons.

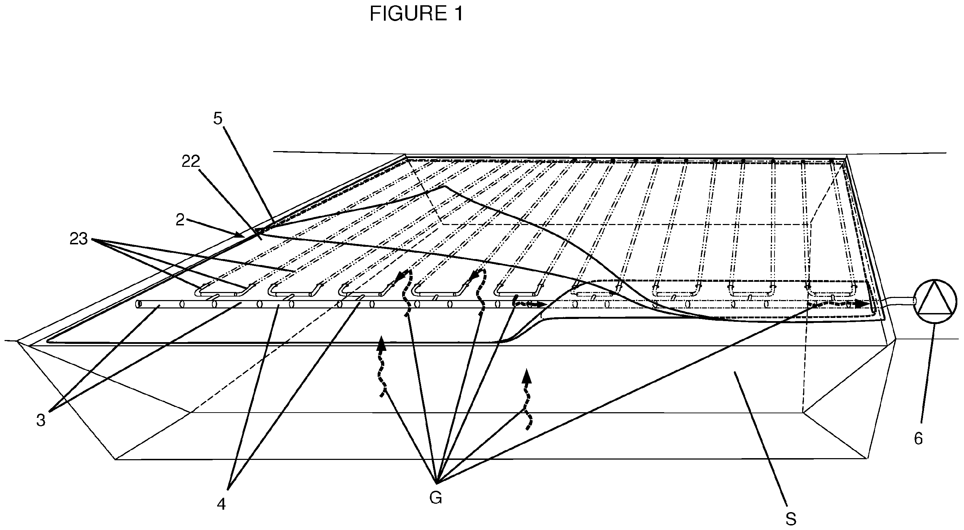

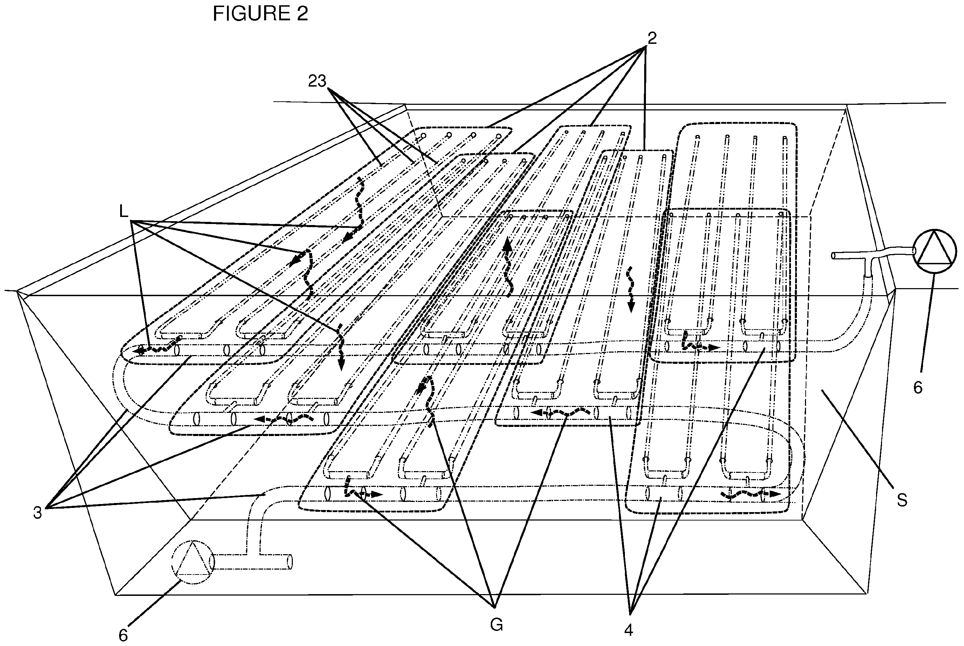

Les nappes (22, 25, 5) sont généralement disposées sensiblement horizontalement dans et/ou sur les agrégats dans lesquels les fluides doivent être récupérés. Le terme « sensiblement » est utilisé dans la présente description pour signifier « approximativement ». En effet, par exemple, pour ce qui est de l'agencement horizontal, on comprend qu'il est d'une part difficile d'obtenir une disposition parfaitement horizontale dans des gravats et que l'on peut d'autre part prévoir en fait une légère pente, par exemple pour en écoulement en direction du pompage pour faciliter ce dernier. Ainsi, dans certains modes de réalisation, les nappes (22, 25, 5) sont utilisées sous la forme d'une couverture recouvrant sensiblement toute la surface des agrégats (S), par exemple comme représenté sur la figure 1. Dans certains modes de réalisation, les nappes (22, 25, 5) sont utilisées sous la forme de lés distribués à l'intérieur des agrégats (S), par exemple comme représenté sur la figure 2. Dans certains modes de réalisation, on utilise les nappes à la fois sous la forme de lés distribués dans la profondeur des agrégats et sous la forme d'une couverture en surface. Dans certains modes de réalisation, notamment lorsque la nappe barrière (5) est aiguilletée sur la nappe passante (22) et laisse passer un peu de fluide, au lieu de n'utiliser que des lés, on peut éventuellement utiliser ces nappes sous la forme d'une couverture enterrée sous la surface des agrégats, sur l'intégralité de la zone à traiter (i.e., la zone des agrégats dans laquelle on veut récupérer les fluides), avec également une ou des nappes en surface éventuellement. De même, il est possible, notamment lorsque la zone à traiter possède des dimensions trop importantes pour une bonne récupération par un géocomposite d'un seul tenant, d'utiliser une pluralité de lés ou de découpes (de formes et dimensions variées) à la surface des agrégats. Le géocomposite (2) est généralement est posé sur la surface des agrégats (S) d'où remontent des fluides gazeux. Cette surface des agrégats pourra être en fait en profondeur dans le sol (au fond d'un bassin par exemple) ou à même le sol. En effet, par exemple dans le cas d'un bassin de rétention, on peut souhaiter récupérer les gaz des sols se trouvant sous le bassin. On pourra donc ménager l'invention sous le bassin, selon les divers modes de réalisation décrits ici. Dans le cas de lés distribués dans la profondeur des agrégats, on pourra par exemple choisir des lés d'environ 4 mètres de largeur faisant toute la longueur de la zone à traiter. De tels lés pourront être répartis par exemple tous les 10 ou 20 mètres de largeur et tous les 5 ou 6 mètres de hauteur. Ces valeurs ne sont données ici qu'à titre illustratifs et ne sont nullement limitatives car il possible d'adapter la largeur et la longueur des lés, ainsi que leur répartition en largeur, en longueur et en profondeur dans la zone à traiter. On comprend de ces chiffres illustratifs et non limitatifs que la figure 2 n'est qu'une représentation schématique dans laquelle les mini-drains sont représentés avec un nombre réduit et une taille exagérée pour des besoins de clarté. De même, et pour les mêmes raisons, le nombre de lés de géocomposite (2) représenté n'est qu'illustratif et les notions de dimensions relatives ne sont pas respectées sur la figure 2. On notera que pour faciliter la représentation, le géocomposite (2) de la figure 2 ne fait apparaître, pour des raisons de clarté, qu'une nappe et des mini-drains, mais on comprendra de la présente description que l'on peut prévoir les divers modes de réalisation décrits, avec la nappe barrière (5) intégrée par exemple. L'homme de métier comprend de la présente description que l'on entend ici par le terme « lé » en fait un morceau de n'importe quelle forme et qu'il n'est pas nécessaire qu'il s'agisse d'un bandeau sensiblement rectangulaire que le terme « lé » désigne en général. On notera que la figure 2 illustre une particularité avantageuse de certains modes de réalisation. En effet, dans ces modes de réalisation, les lés de géocomposite enfouis dans des couches successives au sein des agrégats sont disposés de sorte que les bords d'un lé dans une couche donnée se trouvent à la verticale des bords d'un autre lé d'une autre couche. Ainsi, on obtient un recouvrement entre au moins une partie des lés d'une couche avec les lés des autres couches, de sorte que le fluide traversant les agrégats (sensiblement verticalement mais souvent selon un chemin aléatoire) ait un maximum de chances de rencontrer au moins un lé, voir une pluralité de lés au cours de son trajet (en remontant ou en descendant). De plus, dans les modes de réalisation à lés enfouis, comme par exemple représenté sur la figure 2, le géocomposite utilisé pour les lés comporte une nappe barrière intégrée par aiguilletage sur la nappe passante, par un aiguilletage sauf à proximité des mini-drains. On comprend de la présente demande que l'obtient ainsi, dans certains modes de réalisation, une succession de lés qui laissent quand même passer le(s) fluide(s) sauf au niveau des mini-drains et qui permettent une récupération de fluide distribuée au sein des agrégats au cours du trajet du (ou des) fluides rencontrant les lés successifs de géocomposite. D'autre part, certains modes de réalisation prévoient qu'en plus de ces lés enfouis à nappe barrière aiguilletée, on dispose en surface au moins une membrane imperméable (ou au moins de perméabilité adaptée pour offrir un blocage efficace de fluide). Ainsi, on récupère le fluide grâce aux couches successives de lés de géocomposite à nappe barrière aiguilletée sur la nappe passante, sauf au niveau des mini-drains, pour exercer un pompage efficace et distribué dans les agrégats et on peut bloquer en surface le passage de fluide pour optimiser le traitement des agrégats.

Sur la figure 1 est représenté un exemple illustratif des modes de réalisation où la nappe barrière (5) est distincte de la nappe passante (22). La figure 1 schématise la mise en place du système dans ces modes de réalisation, avec la nappe barrière partiellement repliée sur elle-même, en train d'être déroulée par-dessus la nappe passante (22) qui est en train d'être repliée sur elle-même pour recouvrir les connecteurs (4) et les tuyaux d'évacuation (3). On voit sur la partie à gauche que les mini-drains (23) sortent du géocomposite (2) par des ouvertures pratiquées dans la nappe (22) passante, pour être connectés à l'aide de connecteurs (4) aux tuyaux d'évacuation (3) relié, à une extrémité (à droite sur la figure 1) de la ligne formée par ces tuyaux (3), à un dispositif de pompage (6). L'autre extrémité de la ligne formée par les tuyaux (3) est, dans certains cas, fermée par un bouchon (comme représenté à gauche sur la figure 1 par exemple). On pourra néanmoins prévoir que toutes les extrémités des tuyaux soient raccordées à des dispositifs de pompage (6). Le repli de la nappe passante (22) sur les connecteurs et les mini-drains comme représenté sur la partie droite de la figure 1 permet de protéger ces derniers et de former un compartiment où le fluide est drainé par la nappe jusqu'à son aspiration dans les connecteurs (4).On notera que sur la figure 1 est représentée l'ouverture de la nappe (22) passante pour la connexion des mini-drains, mais que dans le cas où le géocomposite ne comporte qu'une seule nappe passante, celle-ci peut être disposée en-dessous des mini-drains et ne nécessite pas une telle ouverture. De même, il est possible de prévoir géocomposite (2) comprenant une première nappe (22) passante inférieure en-dessous des mini-drains (23) et une seconde nappe (25) passante supérieure au-dessus des drains, avec au moins une nappe plus courte (de préférence la supérieure) que l'autre et dont les mini-drains (23) sont plus courts que la nappe la plus longue (de préférence inférieure) et plus longs que la nappe la plus courte (de préférence supérieure). Ainsi, on peut replier la nappe inférieure (22) la plus longue sur les connecteurs sans avoir à l'ouvrir. De même, on peut également prévoir des nappes de même longueur associées à des mini-drains plus longs que les nappes, pour faciliter la connexion des mini-drains sans avoir à ouvrir une nappe et sans nécessiter de repli. Dans le cas d'un géocomposite à deux nappes, on obtient en coupe transversale une section du type de celle représentée sur la figure 3A, et au niveau du repli formé au-dessus de la portion où les mini-drains sortent du géocomposite, une section du type de celle représentée sur la figure 3B, avec les deux nappes doublées au-dessus et en-dessous des mini-drains (23). La figure 4A représente un géocomposite à double nappes passantes, comme dans la figure 3A, mais enfoui dans les agrégats, tandis que la figure 4B est représenté un géocomposite à une seule passante, également enfoui dans les agrégats. L'homme de métier déduira sans ambiguïté les sections résultant du repli des diverses variantes expliquées dans la présente demande. Les fluides (G, L) sont représentés dans les figures de la présente demande par des flèches pointillées ondulantes. Sur les figures 4A et 4B, on voit que sont représentés des fluides liquides (L) en plus des fluides gazeux (G) et que ces divers types de fluides pourront gagner l'intérieur des mini-drains (23) via les perforations (231) de ces derniers.

L'invention peut être mise en œuvre à la surface des agrégats, comme par exemple en surface du sol, comme par exemple représenté sur la figure 1 ou en profondeur. Dans certains modes de réalisation, notamment dans le cas de décharges enfouies, l'invention est mise en œuvre dans un bassin, comme dans l'exemple représenté sur la figure 2. On notera que l'on peut disposer le système de la figure 1 en surface des agrégats sur le système de la figure 2, comme mentionné précédemment. De plus, on notera que la présente demande mentionne l'utilisation d'au moins géocomposite et qu'il peut en fait être fait utilisation de plusieurs géocomposites (2), que tout ou partie de ces derniers intègre la nappe barrière (5) ou non.

Le système selon l' invention utilise d'autre part des connecteurs (4) agencés pour connecter les mini-drains perforés (23) à des tuyaux d'évacuation (3) reliés à au moins un dispositif de pompage (6), de sorte qu'au moins un fluide (G, L) présent dans les agrégats (S) puisse gagner l'intérieur des mini-drains perforés (23) et être évacué vers le dispositif de pompage (6). On comprend des divers modes de réalisation décrits dans ce qui précède que l'invention concerne un système un comprenant les nappes passante(s) (22, 25) et barrière (5), les mini-drains perforés (23) et les connecteurs (4) reliés par les tuyaux d'évacuation (3) au dispositif de pompage, mais qu'elle concerne également le géocomposite (2) comprenant la (ou les) nappe(s) passante(s) (22, 25) et barrière (5), avec les mini-drains perforés (23). D'autre part, l'invention concerne également un connecteur (4) comme détaillés dans la présente demande.

Le géocomposite (2) selon l'invention intègre la nappe barrière (5). Le géocomposite (2) de récupération de fluide dans des agrégats (S), comporte, d'une part, au moins une nappe, dite passante (22), possédant une perméabilité adaptée au passage de fluide (G, L) et munie de mini-drains perforés (23) et, d'autre part, au moins une nappe, dite barrière (5), possédant une perméabilité adaptée au blocage de fluide (G, L). La nappe barrière est aiguilletée sur la nappe passante (22) sauf au niveau des mini-drains (23), de sorte que la nappe barrière (5) ne forme une barrière au passage des fluides (G, L) qu'au niveau des mini-drains (23). On préfère généralement une nappe barrière laissant passer au moins une partie du ou des fluide(s) (liquide et/ou gazeux) car elle permet notamment d'éviter de former des poches de rétention. Ainsi, en prévoyant une nappe barrière qui laisse passer, au moins partiellement, le(s) fluide(s), on obtient une récupération efficace car on évite l'accumulation de fluide et la récupération se fait progressivement, par exemple dans les couches successives de géocomposite que le système comporte. En particulier, on utilise de préférence une nappe barrière qui forme une barrière complètement imperméable au passage de fluide seulement au niveau des mini-drains où la récupération de fluide peut se faire, alors que le reste de la nappe barrière laisse passer plus ou moins passer le(s) fluide(s). On comprend donc que l'invention permet de multiplier les géocomposite de récupération, enfouis au sein dans les agrégats et/ou en surface des agrégats (ou en complément d'une membrane imperméable en surface) et qu'on obtient ainsi une récupération progressive et relativement homogène de fluide, de manière particulièrement efficace, sans nécessiter forcément d'autres dispositifs tels que des enveloppes étanches autour des agrégats ou des moyens de pompage particulièrement puissants pour aspirer les poches qui se formeraient si l'on ne prévoyaient que des membranes totalement étanches.

Dans certains modes de réalisation, le connecteur (4) comporte au moins un conduit de récupération (41) agencé pour être connecté à au moins un mini-drain perforé (23) et au moins un conduit de collecte (42) agencé pour être connecté à au moins un tuyau d'évacuation (3), l'intérieur du conduit de récupération (41) étant en communication avec l'intérieur du conduit de collecte (42). Un tel connecteur peut être utilisé dans divers types de systèmes de récupération de fluide. En particulier, certains modes de réalisation du connecteur sont particulièrement avantageux pour divers types de systèmes de récupération de fluides. L'invention concerne donc également un connecteur (4) de récupération de fluide dans des agrégats (S), comportant, d'une part, au moins un conduit de récupération (41) agencé pour être connecté à au moins un mini-drain perforé (23) d'au moins un géocomposite (2) comprenant au moins une nappe (22, 25, 5) et des mini-drains perforés (23) et, d'autre part, au moins un conduit de collecte (42) agencé pour être connecté à au moins un tuyau d'évacuation (3) reliés à au moins un dispositif de pompage (6), l'intérieur du conduit de récupération (41) étant en communication avec l'intérieur du conduit de collecte (42), de sorte qu'un fluide, présent dans l'agrégat (S) et gagnant l'intérieur des mini-drains (23), soit évacué vers le dispositif de pompage (6).

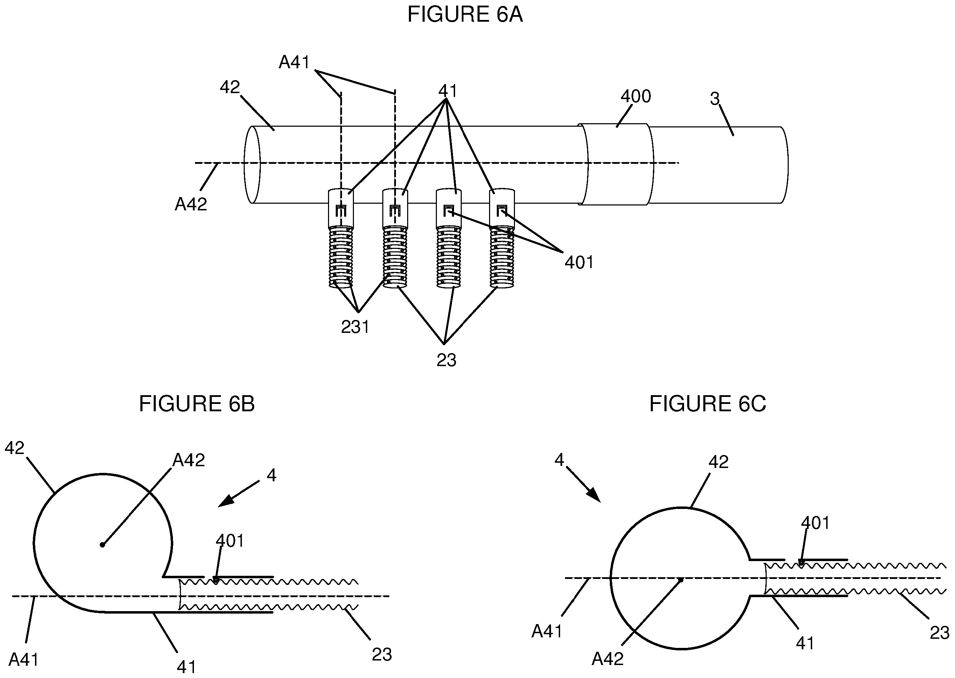

Dans certains modes de réalisation, le conduit de récupération (41) possède des forme et dimensions adaptées à celles des mini-drains perforés (23) et le conduit de collecte (42) possède des forme et dimensions adaptées à celles des tuyaux d'évacuation (3), de sorte que le connecteur (4) soit agencé pour une connexion par emboîtement avec les mini-drains (23) et les tuyaux d'évacuation (3). Dans certains modes de réalisation, au moins un conduit (41, 42) du connecteur comporte des moyens de fixation (401) des mini-drains (23) et/ou des moyens de fixation (400) des tuyaux d'évacuation (3). Par exemple, les mini-drains peuvent être annelés comme mentionné précédemment et représenté sur la figure 5B. Le conduit de récupération (41) pourra comporter des annelures également ou au moins une saillie (401, fig. 5B) (un cran, un bossage, etc.) complémentaires aux annelures des mini-drains pour permettre un emboîtement et une fixation réversible des mini-drains. De même, le tuyau d'évacuation (3) peut également comporter des annelures, et le conduit de collecte (42) pourra comporter au moins une saillie (400, fig. 5B) (un cran, un bossage, etc.) complémentaire pour l'emboitement, comme par exemple représenté sur la figure 5B. L'avantage procuré par l'emboîtement est de faciliter la manipulation et la mise en œuvre du système, de sorte qu'un opérateur perde le moins de temps possible pour la connexion des mini-drains (23) aux tuyaux (3). De préférence, on choisira une complémentarité de formes permettant une étanchéité, au moins relative, de la connexion, de façon à ce que l'aspiration obtenue par le dispositif de pompage n'ait pas trop de déperdition dans le système. On pourra choisir indifféremment un emboitement du connecteur dans ou autour des mini-drains et tuyaux. Par exemple, dans certains modes de réalisation dont un exemple est représenté sur la figure 6A, le connecteur (4) est agencé pour que les mini-drains soient emboités dans le conduit de récupération (41). De plus, dans cet exemple sont représentés des moyens de fixation (401) permettant de verrouiller les mini-drains dans le conduit de récupération (41). Ces moyens de fixation (401) peuvent comporter au moins une patte flexible, par exemple découpée dans le conduit et comprenant une saillie agencée pour s'engager dans une annelure des mini-drains, comme particulièrement visible sur les figures 6B et 6C par exemple. De tels moyens de fixation présentent l'avantage d'être faciles et rapides d'utilisation puisqu'il suffit d'encliqueter les mini-drains (23) dans le connecteur (4). De plus, dans certains modes de réalisation, ces moyens de fixation (401) sont réversibles, comme par exemple dans ceux des figures 6A, 6B et 6C. En effet, dans ces exemples, la patte flexible est accessible de l'extérieur du conduit de récupération (41) grâce à une découpe dans ce dernier, permettant de soulever la patte, avec un outil ou un ongle par exemple, pour retirer le mini-drain (23). D'autre part, on décrit ici des moyens de fixation (400, 401) comme étant inclus dans le connecteur, il est possible qu'ils soient en fait formés par un élément séparé, comme par exemple un manchon, mâle ou femelle, par exemple tel que le manchon femelle (400) représenté sur la figure 6A. Un tel manchon pourra comporter des moyens de fixation, notamment réversibles, tels que des bossages, saillies ou pattes, pour le blocage (verrouillage) des mini-drains ou tuyaux.

Dans certains modes de réalisation, l'intérieur du conduit de récupération (41) est en communication avec l'intérieur du conduit de collecte (42) par l'intermédiaire d'au moins un conduit de connexion (43) dont les parois intérieures débouchent sur les parois intérieures du conduit de récupération (41) et du conduit de collecte (42). Comme particulièrement visible dans l'exemple illustratif de la figure 5D, montrant une coupe transversale du connecteur, le conduit de connexion débouche à l'intérieur des deux autres conduits du connecteur. Les conduits sont ici représentés avec une section circulaire qui est une forme préférée pour les conduits mais on comprendra que l'invention n'est pas limitée à cet exemple de forme car des sections polygonales sont envisageables.

Dans certains modes de réalisation, les conduits (41, 42, 43) du connecteur sont orientés chacun selon au moins un axe longitudinal respectif (A41, A42, A43) et le conduit de connexion (43) est agencé pour que son axe longitudinal (A43) soit non parallèle aux axes (A41, A42) des autres conduits (41, 42) et croise la section transversale d'au moins un de ces autres conduits (41, 42) à proximité de la périphérie de cette section transversale. Comme particulièrement visible dans l'exemple illustratif de la figure 5D, le conduit de connexion (43) est sensiblement tangent à la périphérie circulaire des deux autres conduits. Le connecteur (4) peut être agencé pour qu'une partie de la paroi intérieure du conduit de connexion (43) soit sensiblement tangente à la périphérie de la section d'au moins un des conduits de récupération (41) et/ou de collecte (42), la section étant prise transversalement à l'axe longitudinal du conduit de récupération (41) et/ou du conduit de collecte. Ainsi, cette disposition du conduit de connexion (43) permet de faciliter la récupération d'au moins un fluide liquide (F) par le système. En effet, si on place le connecteur avec le conduit de connexion (43) orienté vers le bas, c'est-à-dire en direction des agrégats (S) d'où remonte le fluide gazeux (G), ce conduit de connexion (43) communique avec le point le plus bas de la section du conduit de récupération (41) et/ou du conduit de collecte (42). De préférence, le conduit de connexion (43) est sensiblement tangent au moins au conduit de récupération (41), comme visible sur la variante des figures 5C et 5D mais également les variantes des figures 5E et 5F, car c'est dans ce conduit de récupération (41) que seront récupérés les liquides en provenance des mini-drains (23). Il est donc important que les liquides s'évacuent bien vers le conduit de collecte (42). Le conduit de connexion (43) peut avoir son axe disposé à proximité du centre ou d'une tangente à la section du conduit de collecte, comme représenté respectivement dans la variante de la figure 5F et dans la variante de la figure 5E. S'il est à proximité d'une tangente au conduit de collecte, on peut alors avoir l'axe du conduit de collecte au-dessus de l'axe du conduit de connexion, mais on peut aussi avoir l'axe du conduit de collecte en-dessous de l'axe du conduit de connexion. Dans ce dernier cas, un avantage supplémentaire est obtenu car le liquide acheminé vers le conduit de collecte ne peut pas retourner dans le conduit de connexion et le conduit de récupération par un simple écoulement. Cependant, cet avantage nécessite d'enfoncer le conduit de collecte dans l'agrégat sur lequel est posé le connecteur. On notera que les diverses variantes décrites ici pour le positionnement avantageux par rapport au conduit de récupération (41) sont décrites en détail pour le cas d'un conduit de connexion (43), mais qu'on pourra prévoir sensiblement la même disposition en l'absence d'un tel conduit de connexion (43). On aura alors un conduit de récupération (41) sensiblement tangent au conduit de collecte (42) et on prendra soin d'enfoncer ce dernier dans le sol de sorte que le liquide dans le conduit de récupération (41) s'écoule dans le conduit de collecte (42) En effet, on a représenté ici le connecteur sensiblement en forme de H car c'est une forme préférée, avec les deux grandes branches du H formées par le conduit de récupération et le conduit de collecte, la petite branche transversale étant formée par le conduit de connexion. Cependant, on peut se passe de conduit de connexion et on pourra par exemple prévoir une forme de X, de K ou même une forme de Y si l'on souhaite connecter des mini-drains et des tuyaux en nombre différents. Dans ces divers agencements, on pourra prévoir que le(s) conduit(s) de récupération débouche(nt) à proximité de la périphérie de la section transversale du ou des conduit(s) de collecte, de manière à obtenir le même effet de faciliter la récupération des fluides liquide. L'homme de métier comprendra de ces divers exemples les variations possibles qui sont à sa portée mais comprendra que la forme de H est particulièrement avantageuse en terme de manipulation car la connexion est facilitée par la distance qui sépare les diverses extrémités du connecteur. D'autre part, le fait que les conduits de récupération et de collecte soient sensiblement parallèles entre eux présente l'avantage de faciliter la manipulation et la disposition des mini-drains et tuyaux dans le système. De plus, ces deux avantages sont encore améliorés par la présence d'un conduit de connexion qui éloigne les extrémités ouvertes du connecteur et facilite la manipulation.

D'autre part, dans certains modes de réalisation, le connecteur peut également ne pas comporter de conduit de connexion (43), ce qui présente notamment l'avantage d'une plus grande compacité. Par exemple, le connecteur peut être agencé avec un conduit de collecte (42) dans lequel débouchent directement des conduits de récupération (41). Certains modes de réalisation particulièrement avantageux de ce type de connecteur sont représentés sur les figures 6A à 6C. Dans ces modes de réalisation, les axes longitudinaux (A41) des conduits de récupération (41) sont non parallèles à l'axe (A42) du conduit de collecte (42), et de préférence sensiblement perpendiculaires à ce dernier, comme par exemple représenté sur la figure 6A. Cette orientation des conduits de récupération (41) présente l'avantage de faciliter la connexion des mini-drains. En effet, on comprend de la présente description que les mini-drains sont de préférence parallèles entre eux et que les tuyaux de récupération (3) courent de préférence sensiblement perpendiculairement à l'axe des mini-drains. On obtient donc ici un connecteur facile et rapide d'utilisation car il ne nécessite pas de courber les mini-drains pour les connecter. De plus, on notera que ce type de modes de réalisation permet de multiplier le nombre de mini-drains connectables sur un même connecteur. Par exemple, sur la figure 6A, le connecteur comporte 4 conduits de récupération (41). On peut bien entendu augmenter ce nombre si besoin. De plus, il devient alors possible d'avoir un seul type de connecteur (4) utilisable pour divers types de géocomposite dont la répartition des mini-drains est différente. Par exemple, les conduits de récupération (41) peuvent être équipés d'un bouchon ou être obturés avec une goupille amovible et être présents en nombre important de sorte qu'on puisse connecter un maximum de mini-drains si le géocomposite en comporte beaucoup ou ne connecter les mini-drains qu'à une partie des conduits de récupération (41) si le géocomposite en comporte moins. On n'utilise alors qu'un seul type de connecteur que le géocomposite comporte beaucoup de mini-drains ou moins. On notera également que les considérations exposées ci-dessus en ce qui concerne les axes des conduits, et notamment l'axe (A43) du conduit de connexion par rapport à la section du conduit de collecte (42) sont valables également en ce qui concerne l'axe (A41) des conduits de récupération (41) par rapport à la section du conduit de collecte (42), notamment dans les modes de réalisation sans conduit de connexion (43). Ainsi, par exemple, le conduit de récupération (41) peut avoir son axe (A41) disposé à proximité du centre ou d'une tangente à la section du conduit de collecte (42), comme représenté respectivement dans la variante de la figure 6B et dans la variante de la figure 6A. Dans ces deux variantes, on comprend que le connecteur est adapté à la récupération de fluide. Dans le cas de la figure 6B, il suffit de poser à plat le connecteur (4) pour que le liquide puisse s'écouler, les reflux vers le conduit de récupération (41) étant limités par l'aspiration dans le conduit de collecte (42). Dans le cas de la figure 6C, il est préférable d'enfoncer le conduit de collecte (42) dans les agrégats pour que le liquide puisse s'écouler, les reflux vers le conduit de récupération (41) étant empêchés par le fait que le conduit de récupération (41) est à un niveau plus élevé que la partie du conduit de collecte (42) la plus basse. On notera d'ailleurs que dans les divers modes de réalisation présentés pour la récupération de liquide, c'est le fait que le niveau le plus bas d'un conduit en amont soit au même niveau ou à un niveau plus élevé que le niveau le plus bas d'un conduit en aval qui permet la récupération de fluide. Ainsi, l'homme de métier pourra prévoir diverses variantes pour l'orientation et la position respective des axes des conduits respectifs du connecteur, en conservant cette relation des niveaux les plus bas à l'intérieur des conduits, pour obtenir un écoulement facilité.

Avec ces divers agencements du connecteur permettant d'optimiser la récupération de liquide, on comprend que le connecteur est utilisable ailleurs que dans un système de récupération de fluide tel que décrit dans la présente demande et peut être utilisé dans tout type de système de récupération de fluide, notamment de récupération de liquide uniquement, comme par exemple ceux décrits dans les demandes de brevet français 10 60514, 09 03857 ou 04 07701, déposées par la demanderesse de la présente demande. Ce type de connecteur présente l'avantage d'être adapté à divers types de fluide, notamment dans certains modes de réalisation où ses conduits sont agencés tangentiellement les uns par rapport aux autres (comme décrit en détail dans la présente demande), mais également l'avantage d'être facile à utiliser et mettre en place, en plus du faible coût de production.

Comme mentionné précédemment, les mini-drains sont de préférence parallèles entre eux dans le géocomposite. On peut donc connecter plusieurs mini-drains (23) à un tuyau d'évacuation (3). On pourra par exemple connecter plusieurs bouts d'un tuyau (3) entre les connecteurs (4) successifs qui permettent de relier plusieurs mini-drains (23). Par exemple, avec la forme en H, deux mini-drains sont connectés par un connecteur à deux portions d'un tuyau d'évacuation qui peut se prolonger jusqu'au connecteur suivant disposé au niveau des deux mini-drains suivants du géocomposite, et ainsi de suite, comme montré sur les figures 1 et 2. On obtient ainsi un ensemble de tuyaux d'évacuation qui évacuent le fluide. On notera cependant que le connecteur peut être agencé pour avoir plus de 2 branches, de façon à connecter plus que 2 mini-drains, qu'il s'agisse d'un connecteur en H ou autre, avec un conduit de connexion, comme par exemple celui des figures 5A à 5F, ou d'un connecteur sans conduit de connexion, en Y ou X ou K ou comme par exemple celui des figures 6A à 6C. Diverses variantes de réalisation sont possibles et envisagées en fonction du nombre et de la répartition des mini-drains par rapport aux tuyaux d'évacuation. Dans la figure 2, les étages formés par les lés distribués à diverses profondeurs sont représentées connectés par l'intermédiaire d'un tuyau de connexion (3). On a représenté ici pour plus de simplicité un circuit traversant les divers étages, mais on comprendra qu'il est possible de multiplier les tuyaux, par exemple pour avoir un tuyau pour chaque étage de façon à ce que chaque étage soit directement relié à la surface et que l'aspiration soit plus efficaces. Diverses adaptations sont possibles en fonction des dimensions (largeur, longueur, profondeur de la zone à traiter). On notera également que sur l'exemple de la figure 2, au fond du bassin est représenté un second dispositif de pompage prévu par exemple pour les fluides liquides (L). Ce second dispositif de pompage pourra également être relié à un système de récupération de liquide disposé au fond, comme par exemple ceux décrits dans les demandes de brevet français 10 60514, 09 03857 ou 04 07701, déposées par la demanderesse de la présente demande. De même, en surface, le dispositif de pompage (6) et le tuyau (3) sont représentés avec un connecteur pouvant recevoir un autre tuyau de récupération (3), comme par exemple celui qui proviendrait d'un géocomposite placé en surface (comme dans la figure 1). On comprend donc les diverses combinaisons possibles. On notera également que le dispositif de pompage peut déboucher par exemple sur un dispositif de recyclage, à l'extérieur des agrégats ou non.

L'invention prévoit un procédé pour la récupération des fluides, notamment pour mettre en place un système selon divers modes de réalisation de l'invention. Le procédé selon l'invention est défini dans la revendication 9. Le procédé peut être mis en œuvre dans un système selon l'invention. Le procédé pourra comporter au moins une étape (unique ou répétée autant que de besoin) d'aspersion d'au moins un type de fluide liquide sur les agrégats déposés sur le système, mais cette étape est optionnelle car le fluide liquide peut être obtenu à partir des eaux de pluie ou, notamment dans le cas de déchets, être produit directement par les agrégats eux-mêmes. De plus, notamment dans le cas où il concerne un bassin dans lequel on dispose des couches successives de géocomposite, comme par exemple dans les décharges enfouies, le procédé peut être précédé par des étapes permettant la mise en place, notamment au fond du bassin, d'un système de récupération de liquides tels que les lixiviats, notamment avec des géocomposites. Ces étapes pourront par exemple être relatives à un procédé de récupération de liquide et/ou un procédé de dépollution, comme par exemple décrit dans les demandes de brevet français 10 60514, 09 03857 ou 04 07701, déposées par la demanderesse de la présente demande. Le procédé pourra alors être complété également d'une étape de connexion des tuyaux d'évacuation (3) à un dispositif de pompage récupérant les liquides, par exemple au fond du bassin.

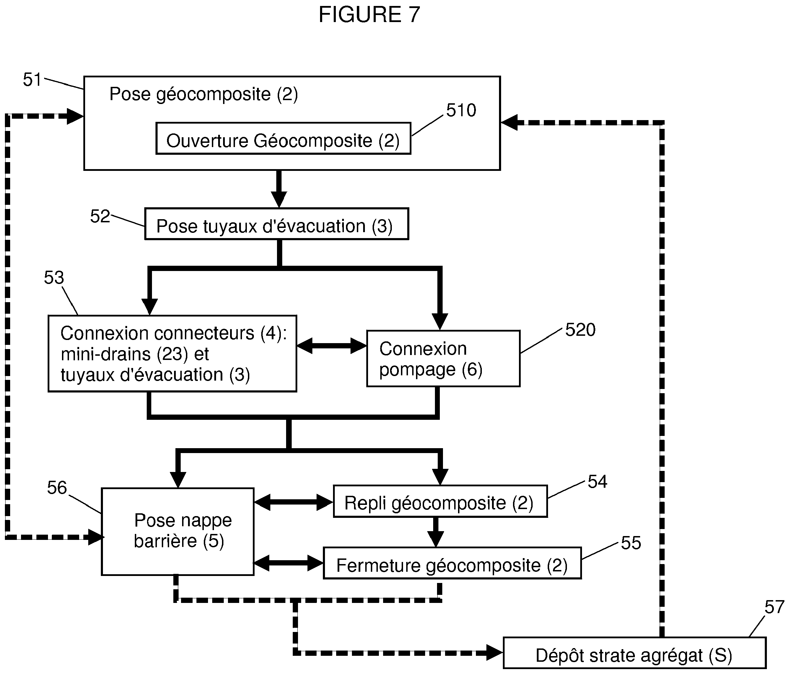

Un exemple du procédé similaire au procédé selon l'invention est représenté schématiquement sur la figure 7 montrant la plupart des étapes possibles du procédé, même certaines étapes optionnelles notamment celles représentées en pointillés. Les flèches doubles et les pointillés indiquent des alternatives possibles dans la succession des étapes. Le procédé de récupération de fluide dans des agrégats (S), comporte une étape de pose (51), au contact des agrégats (S), d'au moins un géocomposite (2) tel que décrit dans la présente demande. Ce géocomposite comprend au moins une nappe, dite passante (22), et des mini-drains perforés (23). Le procédé comporte également une étape de pose (52) de tuyaux d'évacuation (3) reliés à au moins un dispositif de pompage (6), une étape de connexion (53) des mini-drains perforés (23) aux tuyaux d'évacuation (3) à l'aide de connecteurs (4) adaptés, et une étape de pose (56) d'au moins une nappe dite barrière (5), de sorte qu'au moins un fluide (G, L) présent dans les agrégats (S) puisse gagner l'intérieur des mini-drains perforés (23) et être évacué vers le dispositif de pompage (6). Le procédé pourra naturellement comporter une étape de connexion (520) du tuyau (3) à la pompe (6).

Dans certains exemples, les étapes de pose (51) du géocomposite et de pose (56) de la nappe barrière sont mises en œuvre simultanément du fait que la nappe barrière (5) est intégrée au géocomposite (2). Cette intégration est réalisée par un aiguilletage de la nappe barrière sur la nappe passante comme expliqué précédemment. Cet aiguilletage des nappes est alors réalisé lors de la fabrication du géocomposite, ce qui facilite sa mise en œuvre par rapport à une pose de nappe barrière sur la nappe passante lors de la mise en place du système avec des nappes barrière et passante distinctes. En effet, on préfère en général que les deux nappes soient liées entre elles, pour éviter le glissement de l'une par rapport à l'autre et on préfère, comme détaillé ci-dessus, que la nappe barrière ne forme une barrière qu'au niveau des mini-drains. Il est donc plus facile de lier les deux nappes en prévoyant les trous de la nappe barrière par rapport aux mini-drains lors de la fabrication des nappes plutôt que sur le site où elles sont destinées à être mises en place. De même selon l'agencement choisi pour le géocomposite, et notamment de ses nappes, le procédé pourra comporter une étape d'ouverture (510) du géocomposite (découpe) pour faire sortir les mini-drains (23) de la nappe (22) passante ou d'une des deux nappes (22, 25). Comme indiqué précédemment, on peut prévoir un géocomposite qui ne nécessite pas cette étape, par exemple avec des mini-drains qui dépassent d'au moins une nappe. La pose (52) des tuyaux (3) se fait de préférence sur un bord du géocomposite (2) et selon le type de géocomposite (2) utilisé, le procédé pourra comporter une étape de repli (54) d'un bord géocomposite sur les connecteurs, et une éventuelle étape de fermeture (55) du géocomposite par fixation de ce dernier sur lui-même.

Dans certains exemples, l'étape de connexion (53) est obtenue par emboîtement entre un conduit de récupération (41) du connecteur (4) et des mini-drains perforés, grâce à des forme et dimensions du conduit de récupération (41) adaptées à celles des mini-drains perforés (23) et par emboîtement entre un conduit de collecte (42) du connecteur (4) et des tuyaux d'évacuation (3), grâce à des forme et dimensions du conduit de collecte (42) adaptées à celles des tuyaux d'évacuation (3).

Selon divers exemples, les étapes du procédé peuvent être mises en œuvre pour des lés de géocomposite (2) et de nappe barrière (5), distribués au sein des agrégats (S) grâce à des réitérations successives des étapes du procédé lors d'étapes successives de dépôt (57) de strates d'agrégats (S). De plus, les étapes du procédé peuvent être mises en œuvre à la surface des agrégats (S) pour recouvrir cette dernière par une couverture comprenant le géocomposite (2) et la nappe barrière (5).

Dans certains exemples, notamment dans le cas de décharges enfouies, la mise en œuvre des étapes du procédé est précédée de la mise en œuvre d'une étape de dépôt, sur la surface des agrégats (S) à recouvrir, d'au moins une couche d'au moins un type de sédiments ou d'agrégats pour former une couche de fermeture (ou « sol de fermeture ») sous le géocomposite, de façon à protéger ce dernier des agrégats (S), notamment d'éventuels objets contendants dans les déchets.

Il est fait référence dans la présente demande aux demandes de brevet français 10 60514, 09 03857 ou 04 07701, déposées par la même demanderesse. La demande 04 07701 décrit un géocomposite comportant une nappe drainante sur laquelle sont disposés des mini-drains annelés perforés parallèles entre eux, et au moins une nappe filtrante recouvrant les mini-drains annelés perforés, la nappe drainante et les nappes filtrantes étant liées entre elles par la technique de l'aiguilletage. La demande 09 03857 décrit un géocomposite comprenant au moins une nappe drainante sur laquelle sont disposés des mini-drains annelés perforés parallèles entre eux et au moins une nappe filtrante recouvrant les mini-drains annelés perforés, la nappe filtrante étant composée de fibres dans lesquelles est noyé au moins un principe actif antibactérien et/ou bactéricide et/ou fongicide. Ce type de géocomposite est particulièrement adapté à la récupération de liquide, en particulier grâce à ses propriétés anti-colmatage, notamment dans des décharges enfouies. La demande 10 60514 décrit quant à elle un système de captage de composé chimique dans des agrégats, caractérisé en ce qu'il comporte au moins une surface sur laquelle est disposée au moins un géocomposite comportant au moins une nappe drainante sur laquelle sont disposés des mini-drains perforés contenant chacun au moins un fil fixateur de composé chimique, des agrégats (S) étant déposés sur ledit géocomposite de façon à ce qu'un fluide, qui se charge en composé chimique en traversant les agrégats, gagne l'intérieur desdits mini-drains perforés dans lesquels lesdits fils fixateurs captent le(s) composé(s) chimique(s). En particulier, dans certains modes de réalisation, ce système décrit dans cette demande comporte au moins une membrane sensiblement imperméable recouvrant ladite surface. De plus, dans certains modes de réalisation, le système comporte au moins une tranchée collectrice, ménagée dans et/ou au bord de ladite surface, et dont le fond est imperméable et situé à une hauteur inférieure à celle de ladite surface. Dans certains modes de réalisation, ladite tranchée débouche sur au moins un dispositif de pompage.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Géocomposite (2) de récupération de fluide, destiné à la récupération de fluide dans des agrégats (S), qui comporte, d'une part, au moins une nappe, dite passante (22), possédant une perméabilité adaptée au passage de fluide (G, L) et munie de mini-drains perforés (23) et, d'autre part, au moins une nappe, dite barrière (5), possédant une perméabilité adaptée au blocage de fluide (G, L),
le géocomposite étant destiné à être placé avec la nappe barrière (5) au-dessus de la nappe passante (22) lors la récupération de fluide dans les agrégats (S),
le géocomposite (2) étant **caractérisé en ce que** la nappe barrière est aiguilletée sur la nappe passante (22) sauf à proximité des mini-drains (23), de sorte que la nappe barrière (5) forme une barrière au passage des fluides (G, L) uniquement autour des mini-drains (23).

2. Système de récupération de fluide, destiné à la récupération de fluide dans des agrégats (S), **caractérisé en ce qu'**il comporte, d'une part, un géocomposite selon la revendication 1, et d'autre part, des connecteurs (4) connectant les mini-drains perforés (23) à des tuyaux d'évacuation (3) reliés à au moins un dispositif de pompage (6), de sorte qu'au moins un fluide (G, L) présent dans les agrégats (S) puisse gagner l'intérieur des mini-drains perforés (23) et être évacué vers le dispositif de pompage (6).

3. Système selon la revendication 2, **caractérisé en ce qu'**il est disposé sensiblement horizontalement et organisé en une pluralité de lés distribués à l'intérieur des agrégats (S) et/ou en une couverture recouvrant sensiblement toute la surface des agrégats (S).

4. Système selon une des revendications 2 à 3, **caractérisé en ce que** ledit géocomposite (2) comporte au moins une seconde nappe passante (25) disposée de l'autre côté des mini-drains perforés (23) par rapport à la première nappe passante (22).

5. Système selon une des revendications 2 à 4, **caractérisé en ce que** les perméabilités des nappes passante (22, 25) et barrière (5) sont adaptées pour que les fluides (G, L) empruntent préférentiellement le chemin d'évacuation via les mini-drains (23), les connecteurs (4) et les tuyaux d'évacuation (3).

6. Système selon une des revendications 2 à 5, **caractérisé en ce que** le connecteur (4) comporte au moins un conduit de récupération (41) agencé pour être connecté à au moins un mini-drain perforé (23) et au moins un conduit de collecte (42) agencé pour être connecté à au moins un tuyau d'évacuation (3), l'intérieur du conduit de récupération (41) étant en communication avec l'intérieur du conduit de collecte (42).

7. Système selon la revendication 6, **caractérisé en ce que** l'intérieur du conduit de récupération (41) est en communication avec l'intérieur du conduit de collecte (42) par l'intermédiaire d'au moins un conduit de connexion (43) dont les parois intérieures débouchent sur les parois intérieures du conduit de récupération (41) et du conduit de collecte (42).

8. Système selon la revendication précédente, **caractérisé en ce que** les conduits (41, 42, 43) du connecteur sont orientés chacun selon au moins un axe longitudinal respectif (A41, A42, A43) et le conduit de connexion (43) est agencé pour que son axe longitudinal (A43) soit non parallèle aux axes (A41, A42) des autres conduits (41, 42) et croise la section transversale d'au moins un de ces autres conduits (41, 42) à proximité de la périphérie de cette section transversale.

9. Procédé de récupération de fluide dans des agrégats (S), qui comporte une pose (51), au contact des agrégats (S), d'au moins un géocomposite (2), le procédé comprenant au moins une étape de pose (51) d'au moins une nappe, dite passante (22), et des mini-drains perforés (23), une étape de pose (52) de tuyaux d'évacuation (3) reliés à au moins un dispositif de pompage (6), une étape de connexion (53) des mini-drains perforés (23) aux tuyaux d'évacuation (3) à l'aide de connecteurs (4) adaptés, le procédé comprenant en outre une étape de pose (56) d'au moins une nappe dite barrière (5), au-dessus de la nappe passante (22) et des mini-drains perforés (23), la nappe barrière (5) étant aiguilletée sur la nappe passante (22) sauf à proximité des mini-drains (23), de sorte à former une barrière au passage des fluides (G, L) uniquement autour des mini-drains (23) et de sorte qu'au moins un fluide (G, L) présent dans les agrégats (S) puisse gagner l'intérieur des mini-drains perforés (23) et être évacué vers le dispositif de pompage (6).

10. Procédé selon la revendication 9, **caractérisé en ce que** les étapes de pose (51) de la nappe passante (22) et de pose (56) de la nappe barrière (5) sont mises en œuvre simultanément du fait que la nappe barrière (5) est intégrée sur la nappe passante.

11. Procédé selon une des revendications 9 à 10, **caractérisé en ce que** les étapes du procédé sont mises en œuvre pour des lés de la nappe passante (22) (2) et de nappe barrière (5), distribués au sein des agrégats (S) grâce à des réitérations successives des étapes du procédé lors d'étapes successives de dépôt (57) de strates d'agrégats (S).

12. Procédé selon une des revendications 9 à 11, **caractérisé en ce que** les étapes du procédé sont mises en œuvre à la surface des agrégats (S) pour recouvrir cette dernière par une couverture comprenant la nappe passante (22) (2) et la nappe barrière (5).

## Patentansprüche

1. Geokomposit (2) zur Flüssigkeitsrückgewinnung, zur Flüssigkeitsrückgewinnung in Aggregaten (S), das einerseits mindestens eine als Durchlassfolie (22) bezeichnete Folie aufweist, die eine an den Flüssigkeitsdurchgang (G, L) angepasste Durchlässigkeit aufweist und mit perforierten Mini-Abflüssen (23) versehen ist, und anderseits mindestens eine als Sperrfolie (5) bezeichnete Folie aufweist, die eine an die Flüssigkeitssperrung (G, L) angepasste Durchlässigkeit aufweist, wobei das Geokomposit dazu bestimmt ist, mit der Sperrfolie (5) über der Durchlassfolie (22) während der Flüssigkeitsrückgewinnung in den Aggregaten (S) angeordnet zu werden, wobei das Geokomposit (2) **dadurch gekennzeichnet ist, dass** die Sperrfolie auf der Durchlassfolie (22) außer in der Nähe der Mini-Abflüsse (23) festgezurrt ist, so dass die Sperrfolie (5) eine Barriere für den Durchgang von Flüssigkeiten (G, L) nur um die Mini-Abflüsse (23) bildet.

2. Flüssigkeitsrückgewinnungssystem, zur Flüssigkeitsrückgewinnung in Aggregaten (S), **dadurch gekennzeichnet, dass** es einerseits ein Geokomposit (2) nach Anspruch 1 aufweist, und anderseits Konnektoren (4) aufweist, die die perforierten Mini-Abflüsse (23) mit Evakuierungsrohren (3) verbinden, die mit mindestens einer Pumpvorrichtung (6) verbunden sind, so dass mindestens eine in den Aggregaten (S) vorhandene Flüssigkeit (G, L) das Innere der perforierten Mini-Abflüsse (23) erreichen kann und zu der Pumpvorrichtung (6) evakuiert werden kann.

3. System nach Anspruch 2, **dadurch gekennzeichnet, dass** es im Wesentlichen horizontal angeordnet ist, und in einer Vielzahl von Streifen angeordnet ist, die innerhalb der Aggregate (S) verteilt sind und/oder in einer Abdeckung angeordnet ist, die im Wesentlichen die gesamte Oberfläche der Aggregate (S) bedeckt.

4. System nach einem der Ansprüche 2 bis 3, **dadurch gekennzeichnet, dass** das Geokomposit (2) mindestens eine zweite Durchlassfolie (25) aufweist, die auf der anderen Seite der perforierten Mini-Abflüsse (23) relativ zur ersten Durchlassfolie (22) angeordnet ist.

5. System nach einem der Ansprüche 2 bis 4, **dadurch gekennzeichnet, dass** die Durchlässigkeiten der Durchlassfolien (22, 25) und der Sperrfolie (5) so angepasst sind, dass die Flüssigkeiten (G, L) bevorzugt den Evakuierungsweg über die Mini-Abflüsse (23), die Konnektoren (4) und die Evakuierungsrohre (3) nehmen.

6. System nach einem der Ansprüche 2 bis 5, **dadurch gekennzeichnet, dass** der Konnektor (4) mindestens eine Rückgewinnungsleitung (41) aufweist, die so angeordnet ist, dass er mit mindestens einem perforierten Mini-Abfluss (23) verbunden ist, und mindestens eine Sammelleitung (42) aufweist, die so angeordnet ist, dass sie mit mindestens einem Abflussrohr (3) verbunden ist, wobei das Innere der Rückgewinnungsleitung (41) in Verbindung mit dem Inneren der Sammelleitung (42) ist.

7. System nach Anspruch 6, **dadurch gekennzeichnet, dass** das Innere der Rückgewinnungsleitung (41) in Verbindung mit dem Inneren der Sammelleitung (42) über mindestens eine Verbindungsleitung (43) ist, deren Innenwände zu den Innenwänden der Rückgewinnungsleitung (41) und der Sammelleitung (42) führen.

8. System nach dem vorherigen Anspruch, **dadurch gekennzeichnet, dass** die Leitungen (41, 42, 43) des Konnektors jeweils entlang mindestens einer jeweiligen Längsachse (A41, A42, A43) ausgerichtet sind und die Verbindungsleitung (43) so angeordnet ist, dass ihre Längsachse (A43) nicht parallel zu den Achsen (A41, A42) der anderen Leitungen (41, 42) verläuft und den Querschnitt von mindestens einer dieser anderen Leitungen (41, 42) in der Nähe des Umfangs dieses Querschnitts kreuzt.

9. Verfahren zur Flüssigkeitsrückgewinnung in Aggregaten (S), das ein Verlegen (51), in Kontakt mit den Aggregaten (S), mindestens eines Geokomposits (2) umfasst, wobei das Verfahren mindestens einen Schritt des Verlegens (51) mindestens einer als Durchlassfolie (22) bezeichneten Folie und der perforierten Mini-Abflüsse (23), einen Schritt des Verlegens (52) von Evakuierungsrohren (3), die mindestens mit einer Pumpvorrichtung (6) verbunden sind, einen Schritt des Verbindens (53) der perforierten Mini-Abflüsse (23) mit den Evakuierungsrohren (3) mittels angepassten Konnektoren (4) umfasst, wobei das Verfahren weiterhin einen Schritt des Verlegens (56) mindestens einer als Sperrfolie (5) bezeichneten Folie über der Durchlassfolie (22) und der perforierten Mini-Abflüsse (23) umfasst, wobei die Sperrfolie (5) auf der Durchlassfolie (22) außer in der Nähe der Mini-Abflüsse (23) festgezurrt ist, so dass eine Barriere für den Durchgang von Flüssigkeiten (G, L) nur um die Mini-Abflüsse (23) gebildet ist und so dass mindestens eine in den Aggregaten (S) vorhandene Flüssigkeit (G, L) das Innere der perforierten Mini-Abflüsse (23) erreichen kann und zu der Pumpvorrichtung (6) evakuiert werden kann.

10. Verfahren nach Anspruch 9, **dadurch gekennzeichnet, dass** die Schritte des Verlegens (51) der Durchlassfolie (22) und des Verlegens (56) der Sperrfolie (5) gleichzeitig ausgeführt werden, da die Sperrfolie (5) auf dem Durchlassfolie eingebaut ist.

11. Verfahren nach einem der Ansprüche 9 bis 10, **dadurch gekennzeichnet, dass** die Schritte des Verfahrens für Streifen der Durchlassfolie (22) (2) und der Sperrfolie (5) ausgeführt werden, die innerhalb der Aggregate (S) dank aufeinanderfolgender Wiederholungen der Schritte des Verfahrens während aufeinanderfolgender Schritte des Ablagerns (57) von Aggregatschichten (S) verteilt sind.

12. Verfahren nach einem der Ansprüche 9 bis 11, **dadurch gekennzeichnet, dass** die Schritte des Verfahrens auf der Oberfläche der Aggregate (S) ausgeführt werden, um diese mit einer Abdeckung zu bedecken, die die Durchlassfolie (22) (2) und die Sperrfolie (5) umfasst.

## Claims

1. Fluid recovery geocomposite (2), designed for the recovery of fluid in aggregates (S), which comprises, on the one hand, at least one sheet, called a through sheet (22), having permeability adapted to the passage of fluid (G, L) and provided with perforated mini-drains (23) and, on the other hand, at least one sheet, called a barrier sheet (5), having permeability adapted to the blocking of fluid (G, L),
the geocomposite being designed to be placed with the barrier sheet (5) above the through sheet (22) during the recovery of fluid in aggregates (S), the geocomposite (2) being **characterised in that** the barrier sheet is needled on the through sheet (22) except near the mini-drains (23), so that the barrier sheet (5) forms a barrier to the passage of fluids (G, L) only around the mini-drains (23).

2. Fluid recovery system, designed for the recovery of fluid in aggregates (S), **characterised in that** it comprises, on the one hand, a geocomposite according to claim 1 and, on the other hand, connectors (4) connecting the perforated mini-drains (23) to discharge pipes (3) connected to at least one pumping device (6), so that at least one fluid (G, L) present in the aggregates (S) can reach the interior of the perforated mini-drains (23) and be discharged towards the pumping device (6).

3. System according to claim 2, **characterised in that** it is disposed substantially horizontally and organised into a plurality of strips distributed within the aggregates (S) and/or in a covering which covers substantially the whole surface of the aggregates (S).

4. System according to one of claims 2 to 3, **characterised in that** said geocomposite (2) comprises at least one second through sheet (25) disposed on the other side of the perforated mini-drains (23) relative to the first through sheet (22).

5. System according to one of claims 2 to 4, **characterised in that** the permeability of the through (22, 25) and barrier (5) sheets are adapted so that the fluids (G, L) preferably follow the path of discharge towards the mini-drains (23), the connectors (4) and the discharge pipes (3).

6. System according to one of claims 2 to 5, **characterised in that** the connector (4) comprises at least one recovery conduit (41) arranged to be connected to at least one perforated mini-drain (23) and at least one collection conduit (42) arranged to be connected to at least one discharge pipe (3), the interior of the recovery conduit (41) being in communication with the interior of the collection conduit (42).

7. System according to claim 6, **characterised in that** the interior of the recovery conduit (41) is in communication with the interior of the collection conduit (42) by means of at least one connection conduit (43) of which the inner walls open out onto the inner walls of the recovery conduit (41) and of the collection conduit (42).

8. System according to the preceding claim, **characterised in that** the conduits (41, 42, 43) of the connector are each oriented along at least one respective longitudinal axis (A41, A42, A43) and the connection conduit (43) is arranged so that its longitudinal axis (A43) is not parallel to the axes (A41, A42) of the other conduits (41, 42) and crosses the cross-section of at least one of these other conduits (41, 42) near the periphery of this cross-section.

9. Method for the recovery of fluid in aggregates (S), which comprises laying (51), in contact with the aggregates (S), at least one geocomposite (2), the method comprising at least one step of laying (51) at least one sheet, called a through sheet (22), and perforated mini-drains (23), a step of laying (52) discharge pipes (3) connected to at least one pumping device (6), a step of connection (53) of the perforated mini-drains (23) to the discharge pipes (3) with the aid of adapted connectors (4), the method further comprising a step of laying (56) at least one sheet called a barrier sheet (5), above the through sheet (22) and the perforated mini-drains (23), the barrier sheet (5) being needled on the through sheet (22) except near the mini-drains (23), so as to form a barrier to the passage of fluids (G, L) only around the mini-drains (23) and so that at least one fluid (G, L) present in the aggregates (S) can reach the interior of the perforated mini-drains (23) and be discharged towards the pumping device (6).

10. Method according to claim 9, **characterised in that** the steps of laying (51) the through sheet (22) and laying (56) the barrier sheet (5) are carried out simultaneously due to the fact that the barrier sheet (5) is integrated on the through sheet.

11. Method according to one of claims 9 to 10, **characterised in that** the steps of the method are carried out for strips of the through sheet (22) (2) and barrier sheet (5), distributed within the aggregates (S) owing to successive reiterations of the steps of the method during successive steps of deposition (57) of strata of aggregates (S).

12. Method according to one of claims 9 to 11, **characterised in that** the steps of the method are carried out at the surface of the aggregates (S) in order to cover the latter with a covering comprising the through sheet (22) (2) and the barrier sheet (5).
